# EUROPEAN PATENT APPLICATION

(11) **EP 4 836 041 A1**
(43) Date of publication of application: **04.11.2026**
(21) Application number: 24912517.0
(22) Date of filing: 17.12.2024
(51) Int. Cl.: H01M 10/04, H01M 4/02, H01M 4/13, H01M 10/052, H01M 10/0566, H01M 10/0587, H01M 50/586, H01M 50/591

(54) **SECONDARY BATTERY**

(30) Priority: 26.12.2023 JP 2023219263
(71) Applicant: Panasonic Intellectual Property Management Co., Ltd., Kadoma-shi, Osaka 571-0057 (JP)
(72) Inventor: YAMAMOTO, Norihisa, Kadoma-shi, Osaka 571-0057 (JP)
(74) Representative: Novagraaf International SA
(86) International application number: PCT/JP2024/044570
(87) International publication number: WO 2025/142628

(57) **Abstract**

This secondary battery is characterized by comprising: an electrode body in which a positive electrode (11) and a negative electrode (12) are wound with a separator (13) interposed therebetween; a negative electrode current collector plate (17) electrically connected to the negative electrode (12); and an electrolyte solution, the negative electrode (12) having a negative electrode core body (40) and negative electrode mixture layers (42) disposed on the negative electrode core body (40), a negative electrode core body exposed part (44) on which the negative electrode mixture layers (42) are not disposed being provided at one end of the negative electrode core body (40) in the winding axis direction of the electrode body, the negative electrode core body exposed part (44) being joined to the negative electrode current collector plate (17), a swellable resin layer (46) being provided on the negative electrode core body exposed part (44).

## Description

### TECHNICAL FIELD

The present disclosure relates to a technique of a secondary battery.

### BACKGROUND

The secondary battery includes, for example, a winding-type electrode assembly in which a separator is disposed between a positive electrode in which a positive electrode mixture layer is disposed on a positive electrode core and a negative electrode in which a negative electrode mixture layer is disposed on a negative electrode core, and the positive electrode, the negative electrode, and the separator are wound in a state where the positive electrode and the negative electrode are insulated from each other by the separator.

As the secondary battery including the winding-type electrode assembly, a battery adopting an end surface current collecting structure is known from the viewpoint of improving the output of the battery. The end surface current collecting structure is, for example, a structure in which exposed portions of electrode cores disposed at both end portions of the electrode assembly in a winding axis direction are joined to current collector plates.

Conventionally, in a battery adopting an end surface current collecting structure, for example, a technique of providing a cut or a through hole in an exposed portion of an electrode core joined to a current collector plate is known in order to enhance the permeability of an electrolytic solution into an electrode assembly to improve the rapid charge characteristics of the battery (for example, Patent Literatures 1 and 2).

### CITATION LIST

### PATENT LITERATURE

Patent Literature 1: JP 2000-77054 A
Patent Literature 2: JP 2015-103420 A

### SUMMARY

However, in the conventional technique, the permeability of the electrolytic solution into the electrode assembly is insufficient, and thus there is room for improvement in the rapid charge characteristics of the battery.

Therefore, an object of the present disclosure is to provide a secondary battery having excellent rapid charge characteristics.

A secondary battery according to an aspect of the present disclosure includes: an electrode assembly in which a positive electrode and a negative electrode are wound with a separator interposed therebetween; a first current collector plate electrically connected to one of the positive electrode and the negative electrode; and an electrolytic solution, wherein the one electrode includes a band-shaped first core and a first mixture layer disposed on the first core, a first core exposed portion in which the first mixture layer is not disposed is provided at one end portion of the first core in a winding axis direction of the electrode assembly, and the first core exposed portion is joined to the first current collector plate, and a swellable resin layer is provided on the first core exposed portion.

According to one aspect of the present disclosure, a secondary battery having excellent rapid charge characteristics can be provided.

### BRIEF DESCRIPTION OF DRAWINGS

FIG. 1 is a cross-sectional view illustrating one example of the configuration of a secondary battery according to an embodiment.
FIG. 2 is a perspective view illustrating an example of the configuration of a winding-type electrode assembly.
FIG. 3 is a partially enlarged cross-sectional view illustrating the configuration of the vicinity of a lower end portion of the winding-type electrode assembly.
FIG. 4 is a partially enlarged cross-sectional view illustrating another example of the configuration of the vicinity of the lower end portion of the winding-type electrode assembly.
FIG. 5 is a partially enlarged cross-sectional view illustrating the configuration of the vicinity of an upper end portion of the winding-type electrode assembly.

### DESCRIPTION OF EMBODIMENTS

The drawings referred to in the following description of an embodiment are schematically illustrated, and dimensional ratios and the like of components drawn in the drawings may be different from real ones.

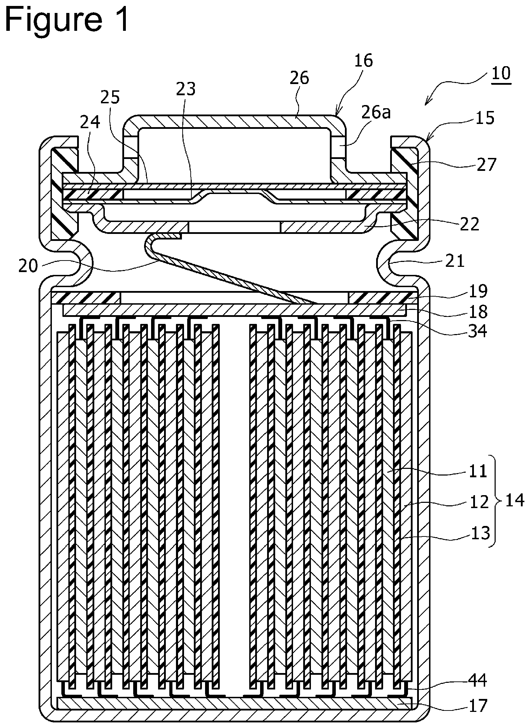

FIG. 1 is a cross-sectional view illustrating one example of the configuration of a secondary battery according to the embodiment. A secondary battery 10 illustrated in FIG. 1 includes a winding-type electrode assembly 14, an electrolytic solution (not illustrated), an outer casing 15 that houses the electrode assembly 14 and the electrolytic solution and the like, and a sealing assembly 16 that closes an opening of the outer casing 15. Hereinafter, for convenience of description, a side toward the sealing assembly 16 will be described as "upper", and a side toward a bottom of the outer casing 15 will be described as "lower".

The electrolytic solution has, for example, lithium ion conductivity. The electrolytic solution contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

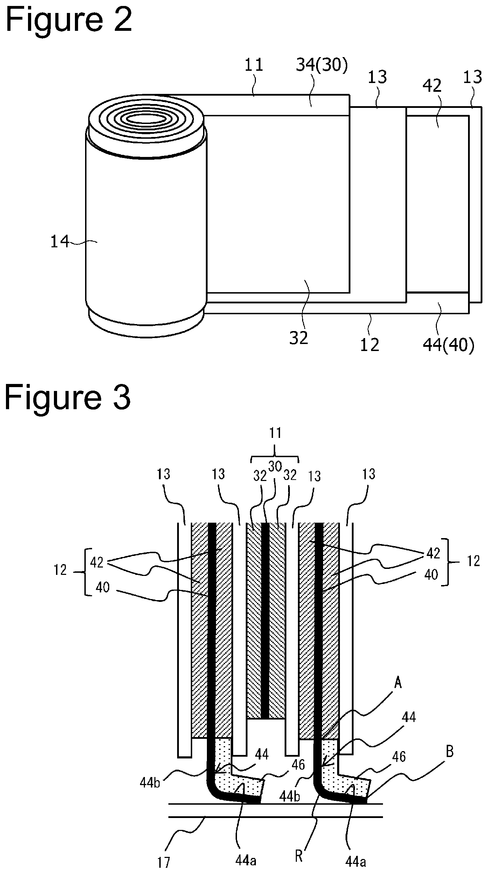

FIG. 2 is a perspective view illustrating an example of the configuration of a winding-type electrode assembly. In FIG. 2, in order to describe the configuration of the winding-type electrode assembly, end portions of members constituting the electrode assembly are illustrated in a developed state. As illustrated in FIGS. 1 and 2, the electrode assembly 14 is a winding-type electrode assembly which includes a positive electrode 11, a negative electrode 12, and a separator 13 disposed between the positive electrode 11 and the negative electrode 12, and in which the positive electrode 11 and the negative electrode 12 are wound with a separator 13 interposed therebetween.

As illustrated in FIG. 2, the positive electrode 11 has a band-like positive electrode core 30 and positive electrode mixture layers 32 disposed on both surfaces of the positive electrode core 30. At the upper end portion (one end portion) of the positive electrode core 30 in the winding axis direction of the electrode assembly 14, the positive electrode mixture layer 32 is not disposed, and a positive electrode core exposed portion 34 where the positive electrode core 30 is exposed is provided. The positive electrode core exposed portion 34 is provided, for example, from one end to the other end in the longitudinal direction of the positive electrode core 30. The negative electrode 12 includes a band-shaped negative electrode core 40 and negative electrode mixture layers 42 disposed on both surfaces of the negative electrode core 40. The negative electrode mixture layer 42 is not disposed at the lower end portion (the other end portion) of the negative electrode core 40 in the winding axis direction of the electrode assembly 14, and a negative electrode core exposed portion 44 where the negative electrode core 40 is exposed is provided. The negative electrode core exposed portion 44 is provided, for example, from one end to the other end in the longitudinal direction of the negative electrode core 40. That is, in the electrode assembly 14 illustrated in FIG. 2, the upper end portion of the electrode assembly 14 in the winding axis direction is configured by the positive electrode core exposed portion 34, and the lower end portion of the electrode assembly 14 in the winding axis direction is configured by the negative electrode core exposed portion 44. The width of the positive electrode core exposed portion 34 (the length of the electrode assembly 14 in the winding axis direction) is, for example, greater than or equal to 2 mm and less than or equal to 20 mm. The width of the negative electrode core exposed portion 44 (the length of the electrode assembly 14 in the winding axis direction) is, for example, greater than or equal to 2 mm and less than or equal to 20 mm.

Examples of the positive electrode core 30 constituting the positive electrode 11 include a foil of a metal, such as aluminum or an aluminum alloy, which is stable in the potential range of the positive electrode 11, and a film in which the metal is disposed on its surface layer. The thickness of the positive electrode core 30 is, for example, greater than or equal to 10 µm and less than or equal to 50 µm. The positive electrode mixture layer 32 contains, for example, a positive electrode active material, a conductive agent, and a binder and the like. The positive electrode 11 can be produced by applying a positive electrode mixture slurry containing the positive electrode active material and the like onto the positive electrode core 30, drying the applied film, and then rolling the applied film to form the positive electrode mixture layer 32 on the positive electrode core 30. The positive electrode mixture layer 32 may be formed on both surfaces or one surface of the positive electrode core 30. The thickness of the positive electrode mixture layer 32 is, for example, greater than or equal to 10 µm and less than or equal to 150 µm on one side of the positive electrode core 30.

Examples of the positive electrode active material include a lithium-containing metal composite oxide. Examples of the metal element contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferred lithium-containing metal composite oxide is a composite oxide containing at least one of Ni, Co, Mn, and Al.

Examples of the conductive agent include carbon blacks such as acetylene black and Ketjenblack, and carbon materials such as graphite and carbon nanotube (single-walled carbon nanotube, multi-walled carbon nanotube, etc.). Examples of the binder include fluororesins such as polytetrafluoroethylene (PTFE) and polyvinylidene fluoride (PVDF), polyacrylonitrile (PAN), a polyimide resin, an acrylic resins, a polyolefin resin, a styrene-butadiene copolymer (SBR), carboxymethyl cellulose (CMC), polyacrylic acid (PAA), and polyethylene oxide (PEO).

The negative electrode 12 includes a negative electrode core 40 and negative electrode mixture layers 42 formed on both surfaces of the negative electrode core 40. Examples of the negative electrode core 40 include a foil of a metal, such as copper or a copper alloy, which is stable in the potential range of the negative electrode 12, and a film in which the metal is disposed on its surface layer. The thickness of the negative electrode core 40 is, for example, greater than or equal to 5 µm and less than or equal to 50 µm. The negative electrode mixture layer 42 contains, for example, a negative electrode active material and a binder and the like. The negative electrode 12 can be produced by, for example, applying a negative electrode mixture slurry containing a negative electrode active material and the like onto the negative electrode core 40, drying the applied film, and then compressing the film to form the negative electrode mixture layer 42 on the negative electrode core 40. The negative electrode mixture layer 42 may be formed on both surfaces or only one surface of the negative electrode core 40. The thickness of the negative electrode mixture layer 42 is, for example, greater than or equal to 10 µm and less than or equal to 150 µm on one side of the negative electrode core 40.

As the negative electrode active material, a carbon material that reversibly occludes and releases lithium ions is generally used. Examples of the carbon material include natural graphites such as scale-like graphite, massive graphite, and earthy graphite, and artificial graphites such as massive artificial graphite and graphitized mesophase carbon microbeads. Examples of the negative electrode active material include metals alloyable with lithium such as Si and Sn, alloys containing the metals, and compounds containing the metals in addition to the carbon material. Examples of the binder include materials similar to those for the positive electrode 11. In addition, the negative electrode mixture layer 42 may contain a conductive agent.

As the separator 13, for example, a porous sheet having ion permeability and insulating properties is used. Specific examples of the porous sheet include a microporous thin film, a woven fabric, and a nonwoven fabric. The material of the separator 13 is preferably a polyolefin resin such as polyethylene or polypropylene, or cellulose or the like. The separator 13 may have either a single layer structure or a laminated structure. On the surface of the separator 13, a heat-resistant layer or the like may be formed.

The secondary battery 10 illustrated in FIG. 1 includes a negative electrode current collector plate 17 disposed below the electrode assembly 14. The negative electrode current collector plate 17 is a metal plate made of, for example, nickel or a nickel alloy or the like. The negative electrode core exposed portion 44 at the lower end portion of the electrode assembly 14 is joined to the negative electrode current collector plate 17 by welding or the like. The negative electrode current collector plate 17 is joined to an inner surface of a bottom plate of the outer casing 15 by welding or the like. That is, the negative electrode core exposed portion 44 is electrically connected to the outer casing 15 via the negative electrode current collector plate 17, and the outer casing 15 serves as a negative electrode terminal.

The outer casing 15 is, for example, a bottomed cylindrical metal container. A gasket 27 is provided between the outer casing 15 and the sealing assembly 16 to ensure the sealability of the inside of the battery. The outer casing 15 includes, for example, a groove portion 21 which supports the sealing assembly 16 and in which a part of a side surface portion protrudes inward. The groove portion 21 is preferably formed in an annular shape along the circumferential direction of the outer casing 15, and supports the sealing assembly 16 on its upper surface.

The sealing assembly 16 illustrated in FIG. 1 is structured by laminating, in sequence from the electrode assembly 14 side, a filter 22, a lower vent member 23, an insulating member 24, an upper vent member 25, and a cap 26. Each of the members forming the sealing assembly 16 has, for example, a disk shape or a ring shape, and the members excluding the insulating member 24 are electrically connected to each other. The lower vent member 23 and the upper vent member 25 are connected to each other at their central portions, and the insulating member 24 is interposed between peripheral edges of the lower vent member 23 and the upper vent member 25. When the internal pressure of the secondary battery 10 increases due to heat generated by an internal short circuit or the like, for example, the lower vent member 23 deforms so as to push the upper vent member 25 up toward the cap 26 side and breaks, so that a current path between the lower vent member 23 and the upper vent member 25 is cut off. When the internal pressure further increases, the upper vent member 25 ruptures, and gas is discharged from a through hole 26a of the cap 26.

The secondary battery 10 illustrated in FIG. 1 includes a positive electrode current collector plate 18 disposed above the electrode assembly 14, an annular insulating plate 19 disposed on the positive electrode current collector plate 18, and a connection lead 20. The positive electrode current collector plate 18 is a metal plate made of, for example, aluminum or an aluminum alloy or the like. The connection lead 20 is, for example, a metal member made of aluminum or an aluminum alloy or the like. The positive electrode core exposed portion 34 at the upper end portion of the electrode assembly 14 is joined to the positive electrode current collector plate 18 by welding or the like. The lower end portion of the connection lead 20 is joined to the upper surface of the positive electrode current collector plate 18 by welding or the like. The connection lead 20 extends toward the sealing assembly 16 through a through hole of the insulating plate 19, and the upper end portion of the connection lead 20 is joined to the lower surface of the filter 22 of the sealing assembly 16 by welding or the like. The positive electrode core exposed portion 34 is electrically connected to the filter 22 via the positive electrode current collector plate 18 and the connection lead 20. That is, the cap 26 electrically connected to the filter 22 serves as a positive electrode terminal.

In the secondary battery 10 illustrated in FIG. 1, in both the positive electrode 11 and the negative electrode 12, an end surface current collecting structure is adopted in which the core exposed portion located at the end portion of the electrode assembly 14 in the winding axis direction is joined to the current collector plate, and current is directly collected from the core. However, in the secondary battery of the present embodiment, one of the positive electrode and the negative electrode may have the end surface current collecting structure, and the other electrode may have a structure in which, for example, an electrode lead is connected to the other electrode and current is collected via the electrode lead, instead of the end surface current collecting structure.

FIG. 3 is a partially enlarged cross-sectional view illustrating the configuration of the vicinity of a lower end portion of the winding-type electrode assembly. The negative electrode core exposed portion 44 illustrated in FIG. 3 extends downward in the winding axis direction of the electrode assembly 14 from an end portion A on the negative composite layer 42 side. The negative electrode core exposed portion 44 has a bending point R, the negative electrode core exposed portion 44 is bent inward in the radial direction of the electrode assembly 14 from the bending point R, and the bent negative electrode core exposed portion 44 is joined to the negative electrode current collector plate 17. The negative electrode core exposed portion 44 may be bent outward in the radial direction of the electrode assembly 14 from the bending point R. The negative electrode core exposed portion 44 is desirably bent inward or outward in the radial direction of the electrode assembly 14 at an angle of greater than or equal to 30° and less than or equal to 90° with respect to the winding axis direction of the electrode assembly 14. The negative electrode core exposed portion 44 may extend linearly to the negative electrode current collector plate 17, and the tip of the negative electrode core exposed portion 44 may be joined to the negative electrode current collector plate 17.

As illustrated in FIG. 3, a swellable resin layer 46 is provided on the negative electrode core exposed portion 44. In the present disclosure, "swellable" means that the resin layer absorbs the electrolytic solution and swells. The negative electrode core exposed portion 44 includes a negative electrode core exposed portion 44a on the inner peripheral surface side of the negative electrode core 40 and a negative electrode core exposed portion 44b on the outer peripheral surface side of the negative electrode core 40. In FIG. 3, the resin layer 46 is provided on the negative electrode core exposed portion 44a on the inner peripheral surface side of the negative electrode core 40. The inner peripheral surface of the negative electrode core 40 is the surface of the negative electrode core 40 located on the inner side in the radial direction of the wound negative electrode 12 when the negative electrode 12 is wound. The outer peripheral surface of the negative electrode core 40 is the surface of the negative electrode core 40 located on the outer side in the radial direction of the wound negative electrode 12 when the negative electrode 12 is wound. As described above, by providing the resin layer 46 on the negative electrode core exposed portion 44, the electrolytic solution is held in the swellable resin layer 46, so that the electrolytic solution is easily supplied into the electrode assembly 14. Therefore, even when rapid charge is performed, the shortage of the electrolytic solution from the electrode assembly 14 is suppressed, so that a secondary battery having excellent rapid charge characteristics is obtained. The negative electrode core exposed portion 44 is reinforced by the resin layer 46, and thus even when an uneven stress is applied to the negative electrode core exposed portion 44 due to the minute movement of the electrode associated with charge and discharge, the deformation (for example, folding, bending) or damage (for example, cut) of the negative electrode core exposed portion 44 is suppressed. When the negative electrode core exposed portion 44 is deformed or damaged, for example, the deformed or damaged negative electrode core exposed portion 44 may break through the separator to cause an internal short circuit. In the present embodiment, the deformation or damage of the negative electrode core exposed portion 44 is suppressed by the resin layer 46, and thus the occurrence of the internal short circuit associated with charge and discharge is suppressed.

As illustrated in FIG. 3, the resin layer 46 may be provided on the negative electrode core exposed portion 44a on the inner peripheral surface side of the negative electrode core 40, or may be provided on the negative electrode core exposed portion 44b on the outer peripheral surface side of the negative electrode core 40, or may be provided on both the negative electrode core exposed portion 44a and the negative electrode core exposed portion 44b, although not described with reference to the drawings. Among them, the resin layer 46 is preferably provided on the negative electrode core exposed portion 44a on the inner peripheral surface side of the negative electrode core 40. In general, the negative electrode core exposed portion 44 is bent inward in the radial direction of the electrode assembly 14 from the bending point R, and thus by providing the resin layer 46 on the negative electrode core exposed portion 44a on the inner peripheral surface side of the negative electrode core 40, the negative electrode core exposed portion 44b on the outer peripheral surface side of the negative electrode core 40 can be used as a joint surface with the negative electrode current collector plate 17, and an increase in electrode plate resistance is suppressed. When the negative electrode core exposed portion 44 is bent inward in the radial direction of the electrode assembly 14 from the bending point R, the electrolytic solution is also easily held in a space between the resin layer 46 on the negative electrode core exposed portion 44a on the inner peripheral surface side of the negative electrode core 40 and the adjacent negative electrode core exposed portion 44 on the inner side in the radial direction of the electrode assembly 14. As a result, even when the rapid charge is performed, the shortage of the electrolytic solution in the electrode assembly 14 is further suppressed, so that a secondary battery having more excellent rapid charge characteristics is obtained.

As illustrated in FIG. 3, in the negative electrode core exposed portion 44a on the inner peripheral surface side of the negative electrode core 40, the resin layer 46 may be disposed over the entire region from the end portion A on the negative electrode mixture layer 42 side to the end portion B on the negative electrode current collector plate 17 side. However, in order to suppress the damage of the resin layer 46 at the bending point R and to suppress the decrease in the retention of the electrolytic solution, the resin layer 46 may be disposed on a region from the bending point R to the end portion B on the negative electrode current collector plate 17 side in the negative electrode core exposed portion 44a and may not be disposed on a region from the end portion A on the negative electrode mixture layer 42 side to the bending point R.

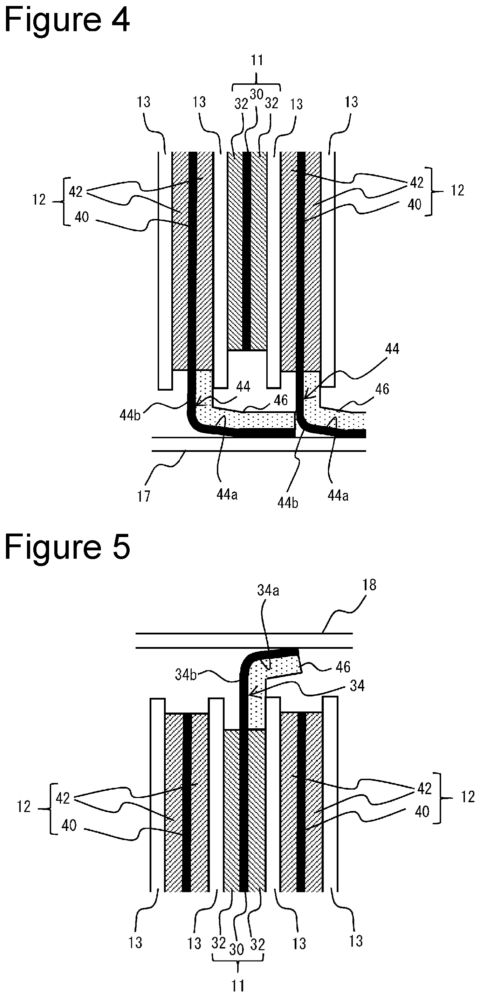

FIG. 4 is a partially enlarged cross-sectional view illustrating another example of the configuration of the vicinity of the lower end portion of the winding-type electrode assembly. As illustrated in FIG. 4, the resin layer 46 on the negative electrode core exposed portion 44a provided on one negative electrode core 40 may be in contact with the negative electrode core exposed portion 44b (or a resin layer (not shown) provided on the negative electrode core exposed portion 44b) provided on one negative electrode core 40 adjacent to another negative electrode core 40 on the inner side in the radial direction of the electrode assembly 14. As a result, the amount of the electrolytic solution held in a space between the resin layer 46 on the negative electrode core exposed portion 44a on the inner peripheral surface side of the negative electrode core 40 and the adjacent negative electrode core exposed portion 44 on the inner side in the radial direction of the electrode assembly 14 increases, so that a secondary battery having excellent rapid charge characteristics is obtained.

The resin layer 46 is not particularly limited as long as it is a layer mainly composed of a swellable resin. Here, the phrase "mainly composed of a resin" means that the ratio of the resin is the highest among the materials constituting the resin layer 46. The content of the resin in the resin layer 46 is, for example, preferably greater than or equal to 80% by mass, and preferably greater than or equal to 90%. The resin layer 46 is formed, for example, by applying a resin solution onto the negative electrode core exposed portion 44. Examples of the resin (that is, the resin contained in the resin solution) contained in the resin layer 46 include fluororesins such as polytetrafluoroethylene (PTFE) and polyvinylidene fluoride (PVDF), polyacrylonitrile (PAN), a polyimide resin, an acrylic resin, a polyolefin resin, a styrene-butadiene copolymer (SBR), carboxymethyl cellulose (CMC), polyacrylic acid (PAA), and polyethylene oxide (PEO). Among them, the resin preferably contains at least one selected from the group consisting of carboxymethyl cellulose (CMC), polyvinylidene fluoride (PVDF), polyacrylic acid (PAA), a styrene-butadiene copolymer (SBR), and polyethylene oxide (PEO) from the viewpoint of flexibility, and retention of an electrolytic solution, and the like.

The thickness of the resin layer 46 is arbitrary, and is, for example, preferably greater than or equal to 5 µm and less than or equal to 30 µm, and more preferably greater than or equal to 10 µm and less than or equal to 20 µm.

When electron conductivity is imparted to the resin layer 46, the resin layer 46 may contain a conductive agent. Examples of the conductive agent include carbon blacks such as acetylene black and Ketjenblack, and carbon materials such as graphite and carbon nanotube (single-walled carbon nanotube, multi-walled carbon nanotube, etc.). The content of the conductive agent in the resin layer 46 is, for example, greater than or equal to 1% by mass and less than or equal to 20% by mass.

In the present embodiment, it is preferable that the resin layer 46 is disposed on the negative electrode core exposed portion 44, but even when the resin layer is disposed on the positive electrode core exposed portion 34, the same effect is exhibited. The resin layer 46 may be disposed on both the negative electrode core exposed portion 44 and the positive electrode core exposed portion 34.

FIG. 5 is a partially enlarged cross-sectional view illustrating the configuration of the vicinity of an upper end portion of the winding-type electrode assembly. When the resin layer 46 is applied to the positive electrode 11 side, similarly to the negative electrode 12 side, the resin layer 46 may be provided on the positive electrode core exposed portion 34a on the inner peripheral surface side of the positive electrode core 30, may be provided on the positive electrode core exposed portion 34b on the outer peripheral surface side of the positive electrode core 30, or may be provided on both of them. Among them, as illustrated in FIG. 5, the resin layer 46 is preferably provided on the positive electrode core exposed portion 34a on the inner peripheral surface side of the positive electrode core 30. The inner peripheral surface of the positive electrode core 30 is the surface of the positive electrode core 30 located on the inner side in the radial direction of the wound positive electrode 11 when the positive electrode 11 is wound. The outer peripheral surface of the positive electrode core 30 is the surface of the positive electrode core 30 located on the outer side in the radial direction of the wound positive electrode 11 when the positive electrode 11 is wound. As illustrated in FIG. 5, the resin layer 46 may be disposed over the entire region from the end portion of the positive electrode core exposed portion 34a on the inner peripheral surface side of the positive electrode core 30 on the positive electrode mixture layer 32 side to the end portion thereof on the positive electrode current collector plate 18 side. However, when the positive electrode core exposed portion 34 has a bending point and is bent inward in the radial direction of the electrode assembly 14 from the bending point, in the positive electrode core exposed portion 34a, the resin layer 46 may be disposed on a region from the bending point to the end portion on the positive electrode current collector plate 18 side, and the resin layer 46 may not be disposed on a region from the end portion on the positive electrode mixture layer 32 side to the bending point.

### EXAMPLES

Hereinafter, the present disclosure will be further described with reference to Examples, but the present disclosure is not limited to these Examples.

### <Example 1>

### [Production of Positive Electrode]

A positive electrode mixture slurry was prepared by mixing 100 parts by mass of a positive electrode active material, 1 part by mass of acetylene black (AB), and 0.9 parts by mass of polyvinylidene fluoride (PVDF), and adding an appropriate amount of N-methyl-2-pyrrolidone (NMP) thereto. As the positive electrode active material, aluminum-containing lithium nickel cobalt oxide represented by LiNi_{0.88}Co_{0.09}Al_{0.03}O₂ was used. Next, the positive electrode mixture slurry was applied to both surfaces of the aluminum foil so as to form the above-described positive electrode core exposed portion. This coating film was dried, rolled, and cut into a predetermined electrode plate size to produce a positive electrode including a positive electrode mixture layer formed on both surfaces of a positive electrode core.

### [Production of Negative Electrode]

A negative electrode mixture slurry was prepared by mixing 95 parts by mass of graphite, 5 parts by mass of Si oxide (SiO), 1 part by mass of sodium carboxymethylcellulose (CMC-Na), and 1 part by mass of styrene-butadiene rubber (SBR), and adding an appropriate amount of water thereto. Next, the negative electrode mixture slurry was applied to both surfaces of the copper foil so as to form the above-described negative electrode core exposed portion. This coating film was dried, rolled, and cut into a predetermined electrode plate size to produce a negative electrode including a negative electrode mixture layer formed on both surfaces of a negative electrode core.

A resin solution containing 2% by mass of carboxymethyl cellulose was applied to the entire region of one of the negative electrode core exposed portions to form a resin layer. The one of the negative electrode core exposed portions becomes the negative electrode core exposed portion on the inner peripheral surface side of the negative electrode core when the negative electrode is wound.

### [Preparation of Electrolytic Solution]

5 parts by mass of vinylene carbonate (VC) were added to 100 parts by mass of a mixed solvent obtained by mixing ethylene carbonate (EC) and dimethyl carbonate (DMC) at a volume ratio of 3:7, and lithium hexafluorophosphate (LiPF₆) was dissolved therein at a concentration of 1.5 mol/liter to prepare an electrolytic solution.

### [Production of Test Cell]

A winding-type electrode assembly was produced by spirally winding the positive electrode and the negative electrode with a separator of a polyethylene microporous film interposed therebetween. A positive electrode current collector plate and a negative electrode current collector plate were disposed on upper and lower sides of the electrode assembly, and the positive electrode core exposed portion of the upper end portion of the electrode assembly and the negative electrode core exposed portion of the lower end portion of the electrode assembly were bent toward an inner peripheral side, and then welded to the positive electrode current collector plate and the negative electrode current collector plate. Thereafter, the electrode assembly was housed in a bottomed cylindrical outer casing, the negative electrode current collector plate was welded to the bottom of the bottomed cylindrical outer casing, and the positive electrode current collector plate and a sealing assembly were connected by a connection tab. After a non-aqueous electrolyte was injected into the outer casing, the opening of the outer casing was sealed with the sealing assembly via a gasket to produce a cylindrical test cell.

### <Example 2>

A test cell was produced in the same manner as in Example 1 except that a resin layer was formed on a region from a bending point to an end portion on a negative electrode current collector plate side in a negative electrode core exposed portion on the inner peripheral surface side of a negative electrode core.

### <Example 3>

A test cell was produced in the same manner as in Example 1 except that a resin in a resin solution was changed from carboxymethyl cellulose to polyvinylidene fluoride in the formation of a resin layer.

### <Example 4>

A test cell was produced in the same manner as in Example 1 except that a resin in a resin solution was changed from carboxymethyl cellulose to polytetrafluoroethylene in the formation of a resin layer.

### <Example 5>

A test cell was produced in the same manner as in Example 1 except that a resin in a resin solution was changed from carboxymethyl cellulose to polyacrylonitrile in the formation of a resin layer.

### <Example 6>

A test cell was produced in the same manner as in Example 1 except that a resin in a resin solution was changed from carboxymethyl cellulose to polyacrylic acid in the formation of a resin layer.

### <Example 7>

A test cell was produced in the same manner as in Example 1 except that a resin in a resin solution was changed from carboxymethyl cellulose to a styrene-butadiene copolymer in the formation of a resin layer.

### <Example 8>

A test cell was produced in the same manner as in Example 1 except that a resin in a resin solution was changed from carboxymethyl cellulose to nitrile butadiene rubber in the formation of a resin layer.

### <Example 9>

A test cell was produced in the same manner as in Example 1 except that a resin in a resin solution was changed from carboxymethyl cellulose to a polyimide-based resin in the formation of a resin layer.

### <Example 10>

A test cell was produced in the same manner as in Example 1 except that a resin in a resin solution was changed from carboxymethyl cellulose to polyvinyl alcohol in the formation of a resin layer.

### <Example 11>

A test cell was produced in the same manner as in Example 1 except that a resin in a resin solution was changed from carboxymethyl cellulose to polyethylene oxide in the formation of a resin layer.

### <Comparative Example 1>

A test cell was produced in the same manner as in Example 1 except that a resin layer was not formed on a negative electrode core exposed portion.

### <Comparative Example 2>

A test cell was produced in the same manner as in Example 1 except that a resin layer was not formed on a negative electrode core exposed portion and a plurality of linear cut portions (see Patent Literature 1) were formed in the negative electrode core exposed portion.

### [DC Resistance (DCR)]

Under an environment of 25°C, the test cell of each Example and Comparative Example was charged at a constant current of 0.1 C to a battery voltage of 4.2 V, and then charged at a constant voltage of 4.2 V to a current value of 0.01 C. After resting for 10 minutes, the test cell was discharged at 0.1 C to 2.5 V. A cell voltage (V1) immediately before the start of discharge and a cell voltage (V2) 10 seconds after discharge in a constant current discharge process were measured, and DC resistance was calculated. As a result, there was no difference between the test cells of Examples and Comparative Examples.

### [Evaluation of Internal Short Circuit]

Under an environment of 25°C, the test cell of each Example and Comparative Example was charged at a constant current of 0.5 C to a battery voltage of 4.2 V, and then charged at a constant voltage of 4.2 V to a current value of 0.01 C. Thereafter, the test cell was discharged at a constant current of 0.5 C to 2.5 V. The charge and discharge was defined as 1 cycle, and 5 cycles were performed. Each charged test cell subjected to constant current/constant voltage charge in the 6th cycle was placed in a thermostatic bath at 60°C and stored at a high temperature for 12 hours. The amount of change in voltage change was obtained from the battery voltage of the charged test cell before and after storage at a high temperature, and the test cell in which the amount of change in voltage change was greater than or equal to 0.1 V was defined as a test cell in which an internal short circuit occurred. Among the 50 test cells, the number of test cells in which the internal short circuit occurred was summarized in Table 1.

### [Rapid Charge Test]

Under an environment of 45°C, the test cell of each Example and Comparative Example was charged at a constant current of 2 C to a battery voltage of 4.2 V, and then discharged at a constant current of 0.5 C to 2.5 V. The charge and discharge was defined as 1 cycle, and 100 cycles were performed. Then, a capacity retention rate was determined by the following formula, and the results were summarized in Table 1. 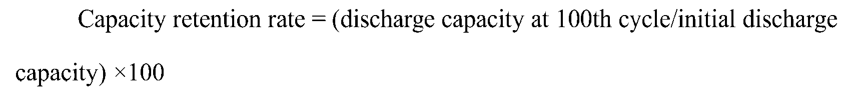 Capacity retention rate = (discharge capacity at 100th cycle/initial discharge capacity) ×100

**[Table 1]**

| | Resin layer | | Evaluation | |
|---|---|---|---|---|
| | Resin | Formed place | Internal short circuit | Capacity retention rate |
| Example 1 | CMC | Entire region of negative electrode core exposed portion on inner peripheral surface side | 1/50 | 85% |
| Example 2 | CMC | Part of negative electrode core exposed portion on inner peripheral surface side | 3/50 | 83% |
| Example 3 | PVDF | Entire region of negative electrode core exposed portion on inner peripheral surface side | 2/50 | 85% |
| Example 4 | PTFE | Entire region of negative electrode core exposed portion on inner peripheral surface side | 3/50 | 84% |
| Example 5 | PAN | Entire region of negative electrode core exposed portion on inner peripheral surface side | 3/50 | 85% |
| Example 6 | PAA | Entire region of negative electrode core exposed portion on inner peripheral surface side | 3/50 | 85% |
| Example 7 | SBR | Entire region of negative electrode core exposed portion on inner peripheral surface side | 3/50 | 84% |
| Example 8 | NBR | Entire region of negative electrode core exposed portion on inner peripheral surface side | 3/50 | 85% |
| Example 9 | Polyimide | Entire region of negative electrode core exposed portion on inner peripheral surface side | 3/50 | 85% |
| Example 10 | PVA | Entire region of negative electrode core exposed portion on inner peripheral surface side | 3/50 | 85% |
| Example 11 | PEO | Entire region of negative electrode core exposed portion on inner peripheral surface side | 3/50 | 85% |
| Comparative Example 1 | - | - | 20/50 | 60% |
| Comparative Example 2 | - | - (Formation of linear cut portion) | 15/50 | 70% |

As illustrated in Table 1, in Examples 1 to 11, the capacity retention rate in the rapid charge test was higher than that in Comparative Examples 1 and 2. From this result, it can be said that in the secondary battery adopting an end surface current collecting structure in which the core exposed portion is joined to the current collector plate, excellent rapid charge characteristics can be obtained by providing the resin layer on the core exposed portion. In Examples 1 to 11, the occurrence of the internal short circuit was also suppressed as compared with Comparative Examples 1 and 2. This result is considered to be because in the secondary battery adopting the end surface current collecting structure in which the core exposed portion is joined to the current collector plate, the deformation and damage of the core exposed portion due to charge and discharge are suppressed by providing the resin layer on the core exposed portion.

The present disclosure is further described by the following embodiments.

### Configuration 1:

A secondary battery including: an electrode assembly in which a positive electrode and a negative electrode are wound with a separator interposed therebetween; a first current collector plate electrically connected to one of the positive electrode and the negative electrode; and an electrolytic solution, wherein
the one electrode includes a band-shaped first core and a first mixture layer disposed on the first core,
a first core exposed portion in which the first mixture layer is not disposed is provided at one end portion of the first core in a winding axis direction of the electrode assembly, and the first core exposed portion is joined to the first current collector plate, and
a swellable resin layer is provided on the first core exposed portion.

### Configuration 2:

The secondary battery according to configuration 1, further including a second current collector plate electrically connected to the other of the positive electrode and the negative electrode, wherein
the other electrode includes a band-shaped second core and a second mixture layer disposed on the second core,
a second core exposed portion in which the second mixture layer is not disposed is provided at one end portion of the second core in the winding axis direction of the electrode assembly, and the second core exposed portion is joined to the second current collector plate, and
a resin layer is provided on the second core exposed portion.

### Configuration 3:

The secondary battery according to configuration 1 or 2, wherein
the first core exposed portion includes a first core exposed portion on a winding inner peripheral surface side of the first core and a first core exposed portion on a winding outer peripheral surface side of the first core, and
the resin layer is provided on the first core exposed portion on the winding inner peripheral surface side of the first core.

### Configuration 4:

The secondary battery according to configuration 3, wherein
the first core exposed portion includes a bending point and is bent inward in a radial direction of the electrode assembly from the bending point, and
the resin layer is provided on a region from the bending point to the end portion on the first current collector plate side in the first core exposed portion on the winding inner peripheral surface side of the first core.

### Configuration 5:

The secondary battery according to configuration 2, wherein
the second core exposed portion includes a second core exposed portion on a winding inner peripheral surface side of the second core and a second core exposed portion on a winding outer peripheral surface side of the second core, and
the resin layer is provided on the second core exposed portion on the winding inner peripheral surface side of the second core.

### Configuration 6:

The secondary battery according to configuration 5, wherein
the second core exposed portion includes a bending point and is bent inward in a radial direction of the electrode assembly from the bending point, and
the resin layer is provided on a region from the bending point to the end portion on the second current collector plate side in the second core exposed portion on the winding inner peripheral surface side of the second core.

### Configuration 7:

The secondary battery according to any one of configurations 1 to 6, wherein the resin layer contains at least one selected from the group consisting of carboxymethyl cellulose (CMC), polytetrafluoroethylene (PTFE), polyvinylidene fluoride (PVDF), polyacrylonitrile (PAN), polyacrylic acid (PAA), a styrene-butadiene copolymer (SBR), nitrile butadiene rubber (NBR), a polyimide-based resin, polyvinyl alcohol (PVA), and polyethylene oxide (PEO).

### Configuration 8:

The secondary battery according to any one of configurations 1 to 7, wherein the resin layer contains a conductive agent.

### Configuration 9:

The secondary battery according to any one of configurations 1 to 8, wherein the one electrode is a negative electrode.

### REFERENCE SIGNS LIST

- 10: Secondary battery
- 11: Positive electrode
- 12: Negative electrode
- 13: Separator
- 14: Electrode assembly
- 15: Outer casing
- 16: Sealing assembly
- 17: Negative electrode current collector plate
- 18: Positive electrode current collector plate
- 19: Insulating plate
- 20: Connection lead
- 21: Groove portion
- 22: Filter
- 23: Lower vent member
- 24: Insulating member
- 25: Upper vent member
- 26: Cap
- 26a: Through hole
- 27: Gasket
- 30: Positive electrode core
- 32: Positive electrode mixture layer
- 34, 34a, 34b: Positive electrode core exposed portion
- 40: Negative electrode core
- 42: Negative electrode mixture layer
- 44, 44a, 44b: Negative electrode core exposed portion
- 46: Resin layer

## Claims

1. A secondary battery comprising: an electrode assembly in which a positive electrode and a negative electrode are wound with a separator interposed therebetween; a first current collector plate electrically connected to one of the positive electrode and the negative electrode; and an electrolytic solution, wherein
the one electrode includes a band-shaped first core and a first mixture layer disposed on the first core,
a first core exposed portion in which the first mixture layer is not disposed is provided at one end portion of the first core in a winding axis direction of the electrode assembly, and the first core exposed portion is joined to the first current collector plate, and
a swellable resin layer is provided on the first core exposed portion.

2. The secondary battery according to claim 1, further comprising a second current collector plate electrically connected to the other of the positive electrode and the negative electrode, wherein
the other electrode includes a band-shaped second core and a second mixture layer disposed on the second core,
a second core exposed portion in which the second mixture layer is not disposed is provided at one end portion of the second core in the winding axis direction of the electrode assembly, and the second core exposed portion is joined to the second current collector plate, and
a resin layer is provided on the second core exposed portion.

3. The secondary battery according to claim 1, wherein
the first core exposed portion includes a first core exposed portion on a winding inner peripheral surface side of the first core and a first core exposed portion on a winding outer peripheral surface side of the first core, and
the resin layer is provided on the first core exposed portion on the winding inner peripheral surface side of the first core.

4. The secondary battery according to claim 3, wherein
the first core exposed portion includes a bending point and is bent inward in a radial direction of the electrode assembly from the bending point, and
the resin layer is provided on a region from the bending point to the end portion on the first current collector plate side in the first core exposed portion on the winding inner peripheral surface side of the first core.

5. The secondary battery according to claim 2, wherein
the second core exposed portion includes a second core exposed portion on a winding inner peripheral surface side of the second core and a second core exposed portion on a winding outer peripheral surface side of the second core, and
the resin layer is provided on the second core exposed portion on the winding inner peripheral surface side of the second core.

6. The secondary battery according to claim 5, wherein
the second core exposed portion includes a bending point and is bent inward in a radial direction of the electrode assembly from the bending point, and
the resin layer is provided on a region from the bending point to the end portion on the second current collector plate side in the second core exposed portion on the winding inner peripheral surface side of the second core.

7. The secondary battery according to any one of claims 1 to 6, wherein the resin layer contains at least one selected from the group consisting of carboxymethyl cellulose (CMC), polytetrafluoroethylene (PTFE), polyvinylidene fluoride (PVDF), polyacrylonitrile (PAN), polyacrylic acid (PAA), a styrene-butadiene copolymer (SBR), nitrile butadiene rubber (NBR), a polyimide-based resin, polyvinyl alcohol (PVA), and polyethylene oxide (PEO).

8. The secondary battery according to any one of claims 1 to 6, wherein the resin layer contains a conductive agent.

9. The secondary battery according to any one of claims 1 to 6, wherein the one electrode is a negative electrode.
